# EUROPÄISCHE PATENTSCHRIFT

(11) **EP 3 784 923 B1**
(45) Veröffentlichungstag und Bekanntmachung des Hinweises auf die Patenterteilung: **26.11.2025**
(21) Anmeldenummer: 19702028.2
(22) Anmeldetag: 18.01.2019
(51) Int. Cl.: F16G 13/16, H04B 1/59

(54) **ENERGIEFUHRUNGSKETTE MIT VERSCHLEISSERKENNUNG**
ENERGY GUIDING CHAIN WITH WEAR DETECTION
CHAINE PORTE-CABLES A DETECTION D'USURE

(30) Priorität: 21.04.2018 DE 202018102239 U
(43) Veröffentlichungstag der Anmeldung: 03.03.2021
(73) Patentinhaber: Igus GmbH, 51127 Köln (DE)
(72) Erfinder: HABERING, Richard, 51143 Köln (DE); KRISTA, Sebastian, 53773 Hennef (DE); SCHMER, Konstantin, 50827 Köln (DE)
(74) Vertreter: Lippert Stachow Patentanwälte Rechtsanwälte
(86) Internationale Anmeldenummer: PCT/EP2019/051216
(87) Internationale Veröffentlichungsnummer: WO 2019/201482

(56) Entgegenhaltungen:
- WO-A1-2007/121713
- CA-A1- 3 011 651
- DE-U1- 202017 102 410

## Beschreibung

Die Erfindung betrifft allgemein eine Lösung zur Verschleißerkennung an einer Energieführungskette, z.B. um einen Ausfall der Energieführungskette und damit der versorgten Maschine bzw. Anlage zu vermeiden.

Eine gattungsgemäße Energieführungskette dient zur geschützten dynamischen Führung von Leitungen, wie Kabeln, Schläuchen oder dergleichen, zwischen einem ersten Anschlussende und einem zweiten Anschlussende, wobei mindestens ein Anschlussende ortsveränderlich z.B. horizontal verfahrbar ist. Die Energieführungskette ist aus einer Anzahl entsprechend gestalteter Kettenglieder aufgebaut, wobei jedes Kettenglied mindestens eine Kettenlasche, meist zwei gegenüberliegende sog. Seitenlaschen aufweist. Die Kettenlaschen benachbarter Kettenglieder sind in Längsrichtung jeweils durch eine Gelenkverbindung, meist mit nominaler Schwenkachse, miteinander drehgelenkig verbunden. Die Gelenkverbindung kann insbesondere durch jeweils einen Gelenk-Zapfen an einem Endbereich der einen Kettenlasche und eine korrespondierende Gelenk-Aufnahme am überlappenden Endbereich der angrenzenden Kettenlaschen gebildet sein. Diese Art Gelenkverbindung hat eine bestimmungsgemäße bzw. nominale Schwenkachse, um welche die Kettenglieder zur Bildung eines Umlenkbogens ideal zueinander abwinkelbar bzw. schwenkbar sein sollen.

Die Erfindung betrifft insbesondere eine derartige Energieführungskette, welche zusätzlich mit elektrotechnischer Verschleißerkennung ausgerüstet ist.

In der EP 1 521 015 A2 wurden verschiedene Ansätze vorgeschlagen, vgl. z.B. Fig.2 oder Fig.8 dort, um kritischen Verschleiß an den Schmalseiten der Kettenlaschen elektrotechnisch zu erfassen.

Eine Weiterentwicklung wurde in der WO 2017/129805 A1 vorgeschlagen. Hiermit kann verschleißbedingter Abrieb, z.B. an den Schmalseiten, drahtlos anhand von Funkmodulen erfasst werden, die z.B. als modulare Abriebsensoren an den Kettengliedern angebracht werden können, als Erstausrüstung oder auch als Nachrüstung einer Energieführungskette.

Die beiden vorstehenden Lehren beruhen auf der Erkennung von Verschleiß, der mit hoher Lebensdauer durch Gleitreibung an den Außenseiten der Kettenglieder auftritt. Dieser Ansatz ist jedoch nicht für alle Energieführungsketten gleichermaßen geeignet.

Insbesondere Energieführungsketten für lange Verfahrwege, die mit Rollen zum Abrollen des Obertrums auf dem Untertrum ausgerüstet sind, d.h. sogenannte Rollenketten, zeigen typisch wenig bis keinen Verschleiß an den Schmalseiten.

Eine Aufgabe der vorliegenden Erfindung ist es mithin, eine alternative Lösung zur Verschleißerkennung vorzugschlagen, die insbesondere wahlweise auch für Energieführungsketten mit Laufrollen geeignet ist.

Diese Aufgabe löst eine Energieführungskette nach Anspruch 1, und unabhängig davon eine Kettenlasche nach Anspruch 13.

Es wird zunächst vorgeschlagen, eine gattungsgemäße Energieführungskette mit mindestens einer Erkennungseinheit zur Erkennung von Verschleiß an mindestens einem Kettenglied auszurüsten.

Gemäß einem Aspekt wird erfindungsgemäß vorgesehen, dass die mindestens eine Erkennungseinheit eine erste elektrische Komponente, die an einem ersten Kettenglied befestigt ist, und eine zweite elektrische Komponente umfasst, die an einem benachbarten mit dem ersten Kettenglied gelenkig verbundenen zweiten Kettenglied befestigt ist. Dabei wirken die Komponenten erfindungsgemäß berührungslos, insbesondere durch geeignete Feldkopplung, z.B. induktiv, magnetisch und/oder kapazitiv, zusammen. Die elektrischen Komponenten können insbesondere durch induktive oder kapazitive Kopplung, vorzugsweise signalübertragend, gekoppelt sein. Die Kopplung kann auch primär magnetisch erfolgen. Hierdurch kann eine Veränderung der Kopplung bei verschleißbedingtem Auftreten von radialem und/oder axialem Spiel in der Gelenkverbindung zwischen erstem und zweitem Kettenglied erfasst werden, insbesondere messtechnisch oder durch sonstige Signalverarbeitung erfasst werden.

Die gekoppelten Komponenten haben dabei eine nominell vorgegebene Ausrichtung zueinander, insbesondere hinsichtlich ihrer Feldkopplung. Sie können mit vorgegebener Ausrichtung relativ zur Gelenkverbindung, z.B. zur nominalen Schwenkachse am jeweiligen Kettenglied befestigt sein.

Ein Kerngedanke der Erfindung beruht darauf, Verschleiß an den Gelenkverbindungen zwischen Kettengliedern bzw. Kettenlaschen - und nicht wie im Stand der Technik z.B. Verschleiß an den Schmalseiten der Kettenglieder - zu erfassen.

In einfachster Ausführungsform wird nur ein Paar miteinander gelenkig verbundener Kettenglieder mit einer Erkennungseinheit umfassend zwei berührungslos gekoppelte elektrische Komponenten ausgerüstet. Als elektrische Komponenten kommen hierbei klassische Schaltungskomponenten, insbesondere Spulen oder Kondensatorelektroden, in Betracht, die mit einem Signal beaufschlagt werden, oder auch rein passive Komponenten außerhalb einer Schaltung, z.B. magnetisch aktive Teile wie Permanentmagneten oder dergleichen.

Eine elektrische Komponente kann vorliegend jede Komponente mit elektrotechnischer Wirkung sein, insbesondere hinsichtlich einer Wirkung im elektrischen Feld und/oder im magnetischen Feld (statisch oder dynamisch).

Dazu können Komponenten für eine primär induktive bzw. magnetische Feldkopplung oder auch eine primär kapazitive Feldkopplung verwendet werden. Je eine der beiden Komponenten ist an einem von beiden Kettengliedern, z.B. an den Kettenlaschen oder einem Anbauteil am oder im Kettenglied, in vorgegebener räumlicher Anordnung und Ausrichtung, z.B. bzgl. des jeweiligen Kettenglieds ortsfest, befestigt. Insbesondere soll dabei eine vordefinierte Ausrichtung der jeweiligen Feldwirkung erzielt werden.

Relativbewegung zwischen den Kettengliedern, insbesondere in Längsrichtung der Energieführungskette, führt somit zu entsprechender Relativbewegung zwischen den elektrischen Komponenten. Die räumliche Ausrichtung der Komponenten kann insbesondere bezüglich der nominalen Schwenkachse der Gelenkverbindung so gewählt sein, dass bei nicht bestimmungsgemäßem radialem und/oder axialem Spiel in der Gelenkverbindung zwischen den ausgewählten Kettengliedern eine Veränderung der nominalen Kopplung (insbesondere der Kopplung im Neuzustand ohne Verschleiß) feststellbar wird. Es kommen unterschiedliche Komponenten und Ausrichtungen in Betracht. Die Kopplung erfolgt berührungslos insbesondere über ein elektrisches Feld, z.B. ein elektromagnetisches oder elektrostatisches Feld. Die Feldkopplung kann dabei insbesondere primär im Raumbereich der Gelenkverbindung zwischen den ausgewählten Kettengliedern erfolgen.

In einer Ausführungsform kann die Erkennungseinheit z.B. nach dem Prinzip eines Hall-Sensors gestaltet sein. Dabei können als elektrisch zusammenwirkende Haupt-Komponenten ein Magnet, vorzugsweise Permanentmagnet, sowie ein mit dem Magneten zusammenwirkendes Hall-Element vorgesehen sein.

Die Erkennungseinheit kann in einer weiteren Ausführungsform primär auf induktive Kopplung ausgerichtet sein und dazu als Komponenten eine erste Spule und eine zweite Spule umfassen. Die Spulen können z.B. als Flachspulen ausgeführt sein, was eine kompakte Bauweise erlaubt.

Hinsichtlich der Ausrichtung können unabhängig davon die Spulen insbesondere koaxial zur nominalen Schwenkachse der Gelenkverbindung (nachfolgend: Nominalachse) gegenüberliegend angeordnet sein. Die Nominalachse entspricht dabei, abgesehen von herstellungsbedingt unvermeidbarem Spiel, der bestimmungsgemäßen Schwenkachse im Neuzustand (ohne Abrieb/Verschleiß der Gelenkpartner). Bei koaxialer Anordnung wirkt sich verschleißbedingtes Gelenkspiel als erkennbare bzw. messbare nachträgliche Fluchtungsabweichung von der koaxialen Soll-Lage aus.

Zur Verstärkung der magnetischen Kopplung ist es vorteilhaft, wenn beide Spulen einen jeweils zugeordneten Magnetkern, z.B. eine flach bauende Topfkern-Hälfte aufweisen. Die Spulen können auch einen gemeinsamen Kern teilen. Auch der Magnetkern kann ggf. koaxial zur nominalen Schwenkachse der Gelenkverbindung angeordnet sein. Grundsätzlich verbessert ein Magnetkern auch die Anfälligkeit bzgl. Störsignale bzw. EMV-Verträglichkeit.

In einer weiteren Ausführungsform sind die erste und zweite Spule als Zylinderspulen ausgeführt. Diese können ggf. koaxial oder auch senkrecht zur Nominalachse der Gelenkverbindung ausgerichtet sein. Bei senkrechter Ausrichtung kann ein gemeinsamer zylindrischer Magnetkern, z.B. ein Ferritkern, koaxial zur Nominalachse am ersten oder zweiten Kettenglied befestigt sein, so dass der Magnetkern in Betriebslage zwischen den Zylinderspulen angeordnet ist. Bei letztgenannter Ausführung verändert das Radialspiel unmittelbar den notwendigen Luftspalt zwischen Magnetkern und den dazu senkrechten Spulen.

Alternativ oder ggf. auch ergänzend zu einer Gestaltung für induktive Kopplung kann eine oder jede Erkennungseinheit als Komponenten, zur Bildung eines Kondensators, eine erste Elektrode (bzw. Kondensatorelektrode) und eine zweite Elektrode umfassen, wobei die Elektroden jeweils eine Symmetrieachse aufweisen, welche koaxial zur Nominalachse angeordnet ist. Die Elektroden können insbesondere in Form von Kreisscheiben ausgeführt sein, um den Gelenkzapfen bzw. die Gelenkaufnahme zu umgeben. Die Verwendung von kapazitiver oder induktiver Kopplung hängt vom Anwendungsfall ab. Falls ein größerer Längsabschnitt überwacht werden soll, lässt sich induktive Kopplung durch Kaskaden-Schaltung mit weniger Aufwand installieren.

Eine Kaskaden-Schaltung über die gesamte Energieführungskette, über jede n-te oder alle Gelenkverbindungen, erlaubt neben der Verschleißerkennung bzw. alternativ hierzu auch die Brucherkennung, d.h. Überwachung eines Kettenbruchs. Auch in diesem Fall ändert sich der axiale Versatz meistens drastisch.

Bei typischen Energieführungsketten hat jede Kettenlasche, zur Bildung der Gelenkverbindung zwischen benachbarten Kettengliedern, an einem ersten Endbereich jeweils einen Zapfen und an einem zweiten Endbereich eine zum Zapfen korrespondierende Aufnahme, um ein Drehgelenk in Art einer Bolzen/Bohrung-Verbindung zu bilden. Bei derartigen Ketten kann, bei mindestens zwei gelenkig verbundenen Kettenlaschen, die erste elektrische Komponente am Zapfen der einen Kettenlasche und die zweite elektrische Komponente an der Aufnahme der anderen Kettenlasche angeordnet werden. Somit liegen die Komponenten unmittelbar an oder ggf. in der Gelenkverbindung.

Insbesondere mit mehreren induktiv koppelnden Erkennungseinheiten kann zumindest ein kritischer Längsabschnitt der Energieführungskette oder die gesamte Länge der Energieführungskette hinsichtlich Gelenkverschleiß überwacht werden. In einem Längsabschnitt können dazu eine Anzahl aufeinanderfolgender Kettenglieder jeweils eine erste elektrische Komponente und eine zweite elektrische Komponente aufweisen, um eine serielle Kaskade aus einer Anzahl Erkennungseinheiten zu bilden. Dazu können z.B. in einem Längsabschnitt eine Anzahl aufeinanderfolgender Kettenlaschen vorgesehen sein, von denen jede die jeweils eine erste elektrische Komponente am Zapfen und eine zweite elektrische Komponente an der Aufnahme aufweist. Die Kettenlaschen können elektrische Leiter aufweisen, welche die beiden Komponenten zu einem Kreis verbinden. So lässt sich eine Kaskade aus einer Anzahl "in Serie" gekoppelter Erkennungseinheiten bilden. Die Kaskaden-Schaltung mit mehreren Erkennungseinheiten hat den Vorteil, dass sich zunehmender Verschleiß einzelner Gelenkverbindungen additiv auf das Ausgangssignal auswirkt.

Um möglichst von der Anzahl Erkennungseinheiten unabhängige Signalübertragung zu erzielen, können die Komponenten als Spulen ausgeführt sein, wobei die Spulen, z.B. innerhalb einer Kettenlasche, eine ungleiche Windungszahl aufweisen. Dabei kann insbesondere ein Windungsverhältnis so gewählt werden, dass ohmsche Spannungsverluste in der Kaskade zumindest teilweise kompensiert werden.

Die Erfindung eignet sich nicht ausschließlich aber insbesondere für Energieführungsketten, die als Rollenketten für lange Verfahrwege ausgelegt sind. Dabei haben zumindest einige Kettenlaschen, insbesondere jede n-te Kettenlasche, Laufrollen zum Abrollen der Kettentrume aufeinander.

Die Erkennungseinheiten bzw. deren Komponenten können in Kettenlaschen aus zumindest einem Laschenstrang, oder aus beiden gegenüberliegenden Laschensträngen integriert sein. Dazu kann vorgesehen sein, dass zumindest einige Kettenlaschen eine erste Aussparung koaxial zum Zapfen für die erste Komponente und eine zweite Aussparung koaxial zur Aufnahme für die zweite Komponente aufweisen.

Ein Nachrüsten bestehender Energieketten lässt sich jedoch einfacher erzielen, wenn die Erkennungseinheiten bzw. deren Komponenten zumindest z.T. an bzw. in Zusatzbauteilen integriert sind, die an den Kettengliedern wahlweise montiert werden können. Entsprechendes gilt auch für die Erstausrüstung bzw. Neuherstellung von Energieketten.

Bei typischer Gestaltung der Kettenglieder, nämlich aus gegenüberliegenden Kettenlaschen, die Laschenstränge und dazwischen einen Aufnahmeraum für Leitungen bilden, sind die Laschenstränge an zumindest einigen, z.B. jedem zweiten Kettenglied, durch die Kettenlaschen verbindende Querstege parallel gehalten.

Die Querstege können zum Nachrüsten von modularen Erkennungseinheiten, ähnlich wie bei Trennstegen zur Innenraumaufteilung, genutzt werden. Dazu kann vorgesehen sein, dass bei mindestens zwei gelenkig verbundenen Kettenlaschen im Aufnahmeraum jeweils ein Innenteil in Art eines Trennstegs zwischen den Querstegen befestigt ist.

Ferner können die Erkennungseinheiten bzw. deren Komponenten auch zumindest teilweise an Querstegen der Kettenglieder angeordnet sein. In einer Ausführungsform kann die erste Komponente der Erkennungseinheit an einer der Kettenlaschen des ersten Kettenglieds, insbesondere koaxial zur nominalen Schwenkachse, und die zweite Komponente der mindestens einen Erkennungseinheit an einem Quersteg des zweiten Kettenglieds befestigt sein, sodass eine vorgegebene Ausrichtung zwischen beiden im Neuzustand erzielt wird. Die erste Komponente kann dabei insbesondere in der Aufnahme der Gelenkverbindung angeordnet sein, was den Herstellungsaufwand verringert bzw. die Stabilität nicht beeinträchtigt.

Vorzugsweise weist ein geeigneter Quersteg eine Halterung zum Aufnehmen und Befestigen der zweiten Komponente der Erkennungseinheit auf. Die Halterung kann insbesondere einen sich quer zum Quersteg, insbesondere in Längsrichtung der Energieführungskette und in Richtung der Laschenhöhe (Abstand zwischen oberer und unterer Schmalseite einer Kettenlasche) erstreckenden Haltearm umfassen. Die zweite Komponente der Erkennungseinheit kann dabei an einem Endbereich des Haltearms befestigt sein und erhält die vorgegebene räumliche Anordnung bzw. Ausrichtung inhärent durch die Geometrie des Haltearms. Der Haltearm kann somit dazu dienen, die zweite Komponente in vorgegebener Ausrichtung so relativ zur ersten Komponente zu positionieren, dass die beiden Komponenten zum Erfassen des verschleißbedingten Auftretens von radialem und/oder axialem Spiel in der Gelenkverbindung berührungslos zusammenwirken.

Mindestens eine der beiden Komponenten kann koaxial zur nominalen Schwenkachse der Gelenkverbindung angeordnet sein. Es können auch beide Komponenten der Erkennungseinheit koaxial zu der nominalen Schwenkachse der Gelenkverbindung ausgerichtet sein.

Insbesondere bei Anwendung einer berührungslosen Kopplung nach dem Hall-Prinzip kann auch eine Komponente koaxial und die andere Komponente mit einem radialen Abstand bzw. exzentrischen Versatz zur nominalen Schwenkachse angeordnet sein. Die Erkennungseinheit kann einen Hall-Sensor (Hall-Effekt Sensor) umfassen bzw. nach Art eines Hall-Sensors ausgebildet sein. Eine der beiden Komponenten der Erkennungseinheit bzw. des Hall-Sensors kann einen Magneten, insbesondere einen Permanentmagneten, umfassen bzw. ein Magnet sein. Die andere Komponente der Erkennungseinheit bzw. des Hall-Sensors kann ein Hall-Element umfassen. Dabei kann ein Betriebsstrom des Hall-Elements insbesondere durch eine elektronische Schaltung eingespeist werden, die mit dem Hall-Element elektrisch verbunden ist und die vorzugsweise an der Halterung am Quersteg gehalten wird.

Im nominalen Betriebszustand kann das Hall-Element derart relativ zum Magneten angeordnet sein, dass es sich zwecks berührungsloser Kopplung im Magnetfeld des Magneten befindet bzw. davon durchströmt ist. Das Magnetfeld bewirkt im Hall-Element eine Hall-Spannung, welche sich bei Änderung der Relativlage des Magneten bezüglich des Hall-Elements verändert. Diese Veränderung der Hall-Spannung kann durch die elektronische Schaltung des Hall-Sensors überwacht bzw. registriert werden, und z.B. an eine Auswerteeinheit zur Signalauswertung weitergegeben werden. Dabei weist der Magnet vorzugsweise eine Symmetrieachse hinsichtlich seines Nominalfelds auf, welche koaxial zu der nominalen Schwenkachse der Gelenkverbindung angeordnet ist, sodass sich bei variierender Achsenlage die Hall-Spannung messbar verändert.

Der Magnet kann insbesondere an einer der Kettenlaschen des ersten von zwei schenkbar miteinander verbundenen Kettengliedern, vorzugsweise in der Gelenkaufnahme, befestigt sein. Das Hall-Element und die elektronische Schaltung des Hall-Sensors können vorzugsweise am Quersteg des zweiten Kettenglieds befestigt sein. Die elektronische Schaltung und/oder das Hall-Element können durch eine geeignete Halterung an dem Quersteg befestigt sein, welche einen sich in Längsrichtung der Energieführungskette und in Richtung Laschenhöhe der Kettenlasche erstreckenden Haltearm umfasst. Der Haltearm kann an einem Längsende des Querstegs mit dem Quersteg verbunden sein und ein freies Ende aufweisen. Das Hall-Element kann an dem freien Ende des Haltearms angeordnet sein, vorzugsweise mit seiner Wirkfläche bzw. Breitseite im Wesentlichen parallel zu der Kettenlasche, an der der Magnet angeordnet ist. Der Haltearm kann sich mit einer Richtungskomponente in Längsrichtung der Energieführungskette und senkrecht zur Längserstreckung des Querstegs und mit einer zweiten Richtungskomponente senkrecht zur Längsrichtung der Energieführungskette und senkrecht zur Längserstreckung des Querstegs bzw. in Richtung der Laschenhöhe erstrecken. Das Hall-Element kann mit seiner Wirkfläche insbesondere senkrecht zu der nominalen Schwenkachse der Gelenkverbindung angeordnet sein, vorzugsweise so, dass es ein radialer Abstand bzw. Versatz zwischen der nominalen Schwenkachse und einem Flächenschwerpunkt der Wirkfläche des Hall-Elements besteht. Ferner kann die Halterung die elektronische Schaltung des Hall-Sensors am Quersteg halten und eine schützende Führung für Leitungen für das Hall-Element und die elektronische Schaltung bereitstellen. Eine Verbindungsleitung zwischen der Schaltung und einer Auswerteeinheit kann somit in der Energiekette mitgeführt werden.

Die Erfindung betrifft auch einen derartigen, insbesondere zur Erstausrüstung oder Nachrüstung geeigneten, Quersteg als solchen. Der erfindungsgemäße Quersteg weist eine Halterung auf, die zumindest zum Aufnehmen einer Komponente einer Erkennungseinheit zur Verschleißerkennung verwendbar ist, insbesondere mit einer elektronischen Schaltung z.B. für ein Hall-Element. Die Halterung kann einen Haltearm aufweisen, der sich, vorzugsweise ausgehend von einem Längsende des Querstegs, senkrecht zu der Längserstreckung des Querstegs erstreckt, zur Befestigung der Komponente der Erkennungseinheit, z.B. eines Hall-Elements, mit vorgegebener Raumlage im Aufnahmeraum der Energieführungskette. Insbesondere kann der Haltearm zur Befestigung einer der beiden Komponenten der Erkennungseinheit in einer vorgegebenen Position relativ zu der nominalen Schwenkachse der benachbarten Gelenkverbindung verwendet werden, sodass sie mit der anderen Komponente der Erkennungseinheit zur Erkennung des Verschleißes in der Gelenkverbindung wirken kann. Vorzugsweise dient der Haltearm zur Befestigung der Komponente der Erkennungseinheit mit einem radialen Abstand bzw. Versatz zu der nominalen Schwenkachse der benachbarten Gelenkverbindung, die die Kettenlaschen eines Laschenstrangs miteinander verbindet. Der Quersteg kann mehrteilig ausgeführt sein mit einer zum Quersteg und dessen Befestigung passenden modularen adapterartigen Halterung.

Die Erfindung betrifft auch, insbesondere zur Erstausrüstung oder Nachrüstung, ein modulares Innenteil als Zusatzbauteil. Dieses hat in Längsrichtung zwei konjugierte angeordnete Endbereiche, von denen jeder axial bzgl. der nominalen Schwenkachse der Gelenkverbindung miteinander verbundener Kettenglieder einem korrespondierenden Endbereich eines weiteren baugleichen Innenteils gegenüber zu liegen kommt. Jeder Endbereich hat dabei eine der beiden elektrischen Komponenten zur gewünschten Feldkopplung, sodass am Endbereich des einen Innenteils die erste Komponente befestigt ist und am gegenüberliegenden Endbereich des anderen Innenteils die zusammenwirkende zweite Komponente befestigt ist. Die Anordnung ist so gewählt, dass diese jeweils mit entsprechenden Komponenten eines baugleichen Innenteils kapazitiv oder induktiv koppelbar sind. Ferner hat das Innenteil in an sich bekannter Weise ober- und unterseitig zwei Befestigungsbereiche zur Befestigung an den Querstegen. Die gegenüberliegenden Endbereiche der Innenteile können ggf. eine weitere Gelenkverbindung koaxial zur nominalen Schwenkachse bilden, dies ist jedoch nicht erforderlich.

Vorgeschlagen wird ferner ein Erkennungssystem, insbesondere zur Früherkennung von kritischer Abnutzung in den Gelenkverbindungen, mit einer Energieführungskette, die nach einem der vorstehenden Ausführungsformen mit mindestens einer Erkennungseinheit ausgerüstet ist. Dabei ist eine Auswertungseinheit zur Signalauswertung mit der mindestens einen Erkennungseinheit, insbesondere einer Kaskade aus Erkennungseinheiten, verbunden. Dies kann drahtgebunden oder z.B. über ein Drahtlosmodul erfolgen. Die Auswertungseinheit kann eine Kopplungsveränderung zwischen der/den ersten und zweiten Komponente(n) über eine Signalauswertung feststellen und ermöglicht so eine quantitative Aussage über den Verschleiß- bzw. Abnutzungszustand der betrachteten Gelenkverbindung(en). Die Auswertungseinheit kann eingangsseitig die Erkennungseinheit(en) mit einer Referenzspannung, insbesondere Wechselspannung, versorgen. Ausgangsseitig kann die Auswertungseinheit ein Ausgangssignal abgreifen. Sie kann zur Auswertung z.B. einen Speicher mit einem gespeicherten Sollwertbereich für den Nominalbetrieb aufweisen und ein von der Erkennungseinheit bzw. den kaskadierten Erkennungseinheiten erhaltenes bzw. abgegriffenes elektrisches Signal, vorzugsweise nach Signal-Filterung, mit dem Sollwertbereich vergleichen. Weicht dieser ggf. nach Berücksichtigung unvermeidbarer Toleranzen übermäßig ab, ist dies ein Indiz für übermäßigen Verschleiß.

Die Erkennungseinheit selbst kann, z.B. bei Verwendung eines Hall-Elements, neben den gekoppelten Haupt-Komponenten eine elektronische Schaltung umfassen, an welche zumindest eine der Komponenten angeschlossen ist.

Die Erfindung betrifft schließlich auch eine einzelne Kettenlasche mit Verschleißerkennung. Bei einer Kettenlasche mit Zapfen und korrespondierender Aufnahme zur Bildung von Gelenkverbindungen mit nominaler Schwenkachse zwischen aufeinanderfolgenden Kettengliedern ist erfindungsgemäß vorgesehen, dass zumindest eine elektrische Komponente im Bereich einer Gelenkverbindung vorgesehen ist, die mit einer geeigneten weiteren elektrischen Komponente berührungslos koppelbar ist. Dazu kann insbesondere eine erste elektrische Komponente im Bereich des Zapfens mit vorgegebener Ausrichtung zur nominalen Schwenkachse, insbesondere koaxial zum Zapfen, befestigt sein, und eine zweite elektrische Komponente im Bereich der Aufnahme mit vorgegebener Ausrichtung zur nominalen Schwenkachse, insbesondere koaxial zur Aufnahme, befestigt sein.

Sowohl auf die Kettenlasche, auf den Quersteg als auch auf das Innenteil sind die oben als bevorzugt beschriebenen Merkmale, insbesondere zur Gestaltung der Erkennungseinheiten bzw. Anordnung der Komponenten, anwendbar.

Weitere Einzelheiten, Merkmale und Vorteile der Erfindung ergeben sich ohne Beschränkung aus der nachfolgenden, ausführlichen Beschreibung bevorzugter Ausführungsbeispiele anhand der beiliegenden Abbildungen. Hierbei zeigen:
FIG.1: eine Seitenansicht einer Energieführungskette;
FIG.2A-2B: Ansichten einer Kettenlasche (FIG.2A) in Draufsicht und eines Teilabschnitts eines Laschenstrangs aus mehreren solcher Kettenlaschen (FIG.2B) zu einer an sich bekannten Bauweise einer Energieführungskette gemäß WO 2007/121713 A1;
FIG.3: ein erstes Ausführungsbeispiel der Erfindung mit induktiver Erkennung als Prinzipschema in Draufsicht eines Längsabschnitts eines Laschenstrangs einer Energieführungskette;
FIG.4: ein zweites Ausführungsbeispiel der Erfindung mit induktiver Erkennung als Prinzipschema in Draufsicht;
FIG.5: ein drittes Ausführungsbeispiel der Erfindung mit induktiver Erkennung als Prinzipschema in Draufsicht;
FIG.6: ein viertes Ausführungsbeispiel der Erfindung mit kapazitiver Erkennung als Prinzipschema in Draufsicht;
FIG.7: eine serielle Kaskade mehrerer Erkennungseinheiten gemäß einem der erfindungsgemäßen Beispiele nach FIG.3-5 als Schaltschema;
FIG.8: eine Erkennungseinheit mit Topfkern gemäß FIG.4 in schematischer Perspektivansicht;
FIG.9: eine schematische Seitenansicht eines Systems mit einer Energieführungskette mit Erkennungseinheiten und einer mit diesen verbundenen Auswertungseinheit;
FIG.10: ein fünftes Ausführungsbeispiel der Erfindung mit induktiver Erkennung, wobei Erkennungseinheiten an Innenteilen vorgesehen sind, die in der Art von Trennstegen im Aufnahmeraum der Energieführungskette angeordnet werden können;
FIG.11: eine Perspektivansicht eines Kettenglieds aus zwei Kettenlaschen und zwei Querstegen für eine Energieführungskette der Bauweise nach FIG.2A-2B; und
FIG.12A-12C: ein Ausführungsbeispiel, bei dem eine Komponente der Erkennungseinheit an einer Kettenlasche und die zweite Komponente an einem Quersteg der benachbarten Kettenlasche befestigt ist, perspektivisch (FIG.12A), in Draufsicht (FIG.12B) und in Seitenansicht (FIG.12C);
FIG.12D: eine Variante zu FIG.12A-12C (in Draufsicht); und
FIG.12E ein Ausführungsbeispiel der Erfindung, mit einer Erkennungseinheit nach Art eines Hall-Sensors (in innerer Seitenansicht).

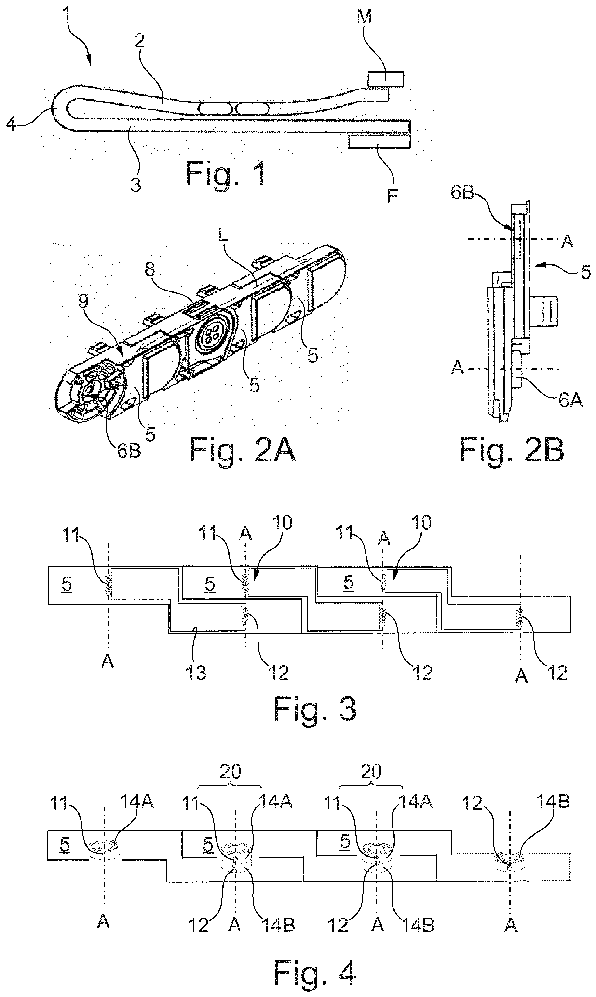

Wie FIG.1 zeigt, bildet eine Energieführungskette 1 beim Verfahren einen Obertrum 2, einen Untertrum 3 und einen beide Trume 2, 3 variabel verbindenden Umlenkbogen 4. Das Obertrum 2 ist endseitig an einem Mitnehmer M, z.B. einer horizontal verfahrenden Maschine, befestigt. Das Untertrum 3 ist endseitig am Festpunkt F festgelegt. Die Energieführungskette 1 führt und schützt nicht näher gezeigte Versorgungsleitungen, z.B. Kabel für elektrische Leistung und/oder Signale vom Festpunkt F zum Mitnehmer M. Die in FIG.1 gezeigte Energieführungskette 1 ist für lange Verfahrwege ausgelegt, wobei das Obertrum 2 auf dem Untertrum 3 abgleiten oder abrollen kann.

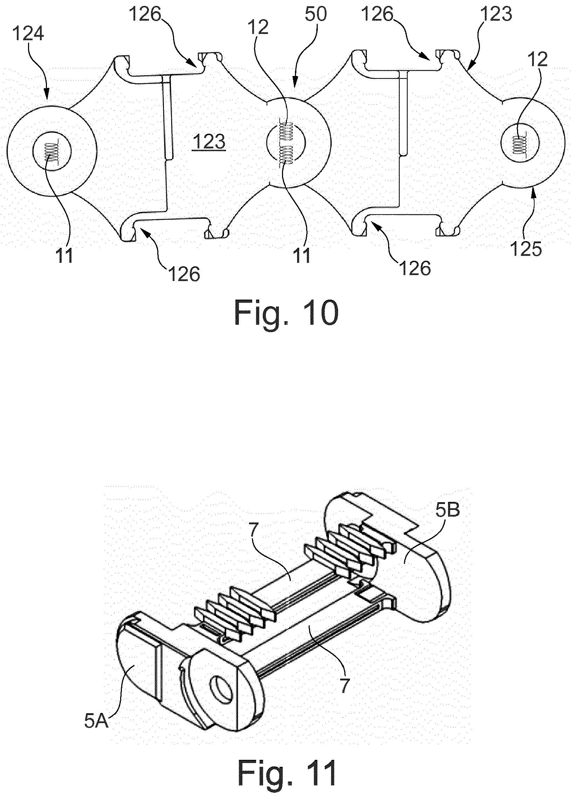

Eine für lange Verfahrwege gestaltete Energieführungskette 1, hier speziell zum Abrollen des Obertrums 2 auf dem Untertrum 3, ist z.B. aus WO 2007/121713 A1 bekannt und rein beispielhaft in FIG.2A und FIG.2B veranschaulicht. Bei dieser Energieführungskette 1 hat jedes Kettenglied (vgl. FIG.11) zwei spiegelsymmetrische Seitenlaschen bzw. Kettenlaschen 5 mit in Draufsicht gekröpfter Bauweise (vgl. FIG.2A). Jede Kettenlasche 5 hat in einem Endbereich einen zylindrischen Zapfen 6A. Am gegenüberliegenden Endbereich ist eine zur drehbaren Lagerung des Zapfens 6A dimensionierte zylindrische Aufnahme 6B im Körper der Kettenlasche 5 vorgesehen. Ein zusammenwirkendes Paar aus einem Zapfen 6A und einer Aufnahme 6B bildet jeweils ein Drehgelenk mit der nominalen Drehachse, hier als Nominalachse A bezeichnet. Die Nominalachse A entspricht im Neuzustand (ohne Verschleiß von Zapfen 6A oder Aufnahme 6B) bis auf technisch notwendiges Spaltmaß den Mittelachsen von einem gelenkbildenden Paar aus Zapfen 6A und Aufnahme 6B, bzw. im Neuzustand deren Drehachse. Die Drehung bzw. der Schwenkwinkel um die Nominalachse A ist durch Winkelanschläge (vgl. FIG.2B) an den Kettenlaschen 5 begrenzt. Die einzelnen Kettenglieder sind aus Kettenlaschen 5 und diese senkrecht zur Längsrichtung L verbindenden Querstegen 7 aufgebaut (vgl. FIG.11) und können einen Umlenkbogen 4 (FIG.1) mit vorgegebenem Radius bilden.

Hinsichtlich der Bauweise der Kettenglieder wird die Lehre aus WO 2007/121713 A1 hier einbezogen. Zumindest einige Kettenlaschen 5 weisen dabei Laufrollen 8 auf, die zum Abrollen auf einer Lauffläche 9 am gegenüberliegenden Trum 2 bzw. 3 zwecks Reibungsverminderung über die Schmalseiten der Kettenlaschen 5 vorstehen. FIG.2A-2B zeigen lediglich beispielhaft eine mögliche Bauform einer Rollenkette. FIG.2B zeigt lediglich einen Längsabschnitt eines Laschenstrangs. An jeder Seite der Energieführungskette 1 ist ein Laschenstrang aus gelenkig verketteten Kettenlaschen 5 vorgesehen. Gegenüberliegende Kettenlaschen 5 beider Stränge sind typisch spiegelsymmetrisch (vgl. FIG.11).

Die vorliegende Erfindung ist aber für grundsätzlich beliebige Energieführungsketten 1, auch Gliederketten mit Innen- und Außenlaschen (nicht gekröpft), solche mit biegsamen Gelenkverbindern (vgl. WO02/086349 A1) oder auch räumlich auslenkbare Leitungsführungen, z.B. gemäß EP 1 616 376 B1, geeignet. Die Erfindung ist auch für beliebige räumliche Anordnungen, z.B. auch vertikal hängende Trume geeignet. Sie ist insbesondere für verschleißarme Energieführungsketten 1 mit Laufrollen 8 geeignet.

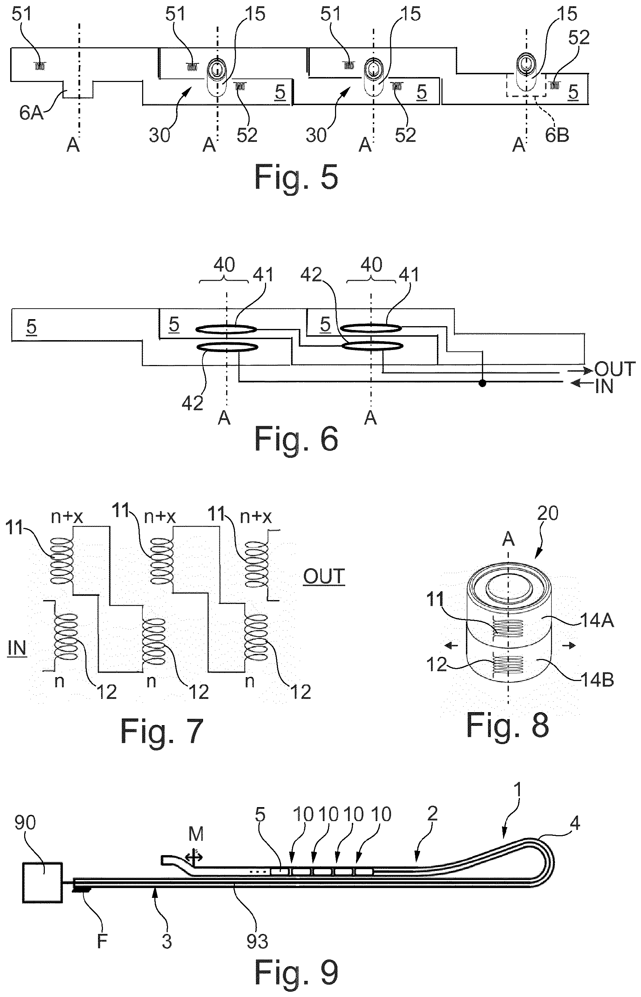

FIG.3 zeigt ein erstes Ausführungsbeispiel als Prinzipschema in Draufsicht. Zumindest ein Laschenstrang aus Kettenlaschen 5 hat mehrere elektrotechnische Erkennungseinheiten 10. Die Erkennungseinheiten 10 sind jeweils im Wesentlichen aus einer ersten elektrischen Komponente, in FIG.3 eine erste Spule 11, und einer zweiten elektrischen Komponente, in FIG.3 eine zweite Spule 12, aufgebaut. Die erste Spule 11 liegt hier z.B. am äußeren Endbereich und die zweite Spule 12 am gegenüberliegenden inneren Endbereich von zwei gelenkig verbundenen gekröpften Kettenlaschen 5. Eine Anzahl Erkennungseinheiten 10 ist, wie FIG.9 veranschaulicht, zumindest über einen Längsabschnitt der Energieführungskette 1 vorgesehen. Bevorzugt wird der Längsabschnitt, der hinsichtlich Verschleiß der Gelenkverbindung aus Zapfen 6A und Aufnahme 6B erfahrungsgemäß am anfälligsten ist, z.B. innerhalb des ersten Drittels ausgehend vom Mitnehmer M.

Die Spulen 11, 12 haben eine vorgegebene Ausrichtung zur Nominalachse A bzw. der bestimmungsgemäßen Schwenkachse zwischen zwei verbundenen Kettenlaschen 5. Gemäß FIG.3 sind die Spulen 11, 12 mit Windungen koaxial zur Nominalachse A ausgerichtet. Die Spulen 11, 12 sind jeweils im entsprechenden Endbereich der Kettenlasche 5 im Bereich des Zapfens 6A bzw. der Aufnahme 6B ortsfest an der jeweiligen Kettenlasche 5 in geeigneter Weise dauerfest befestigt, z.B. form- und/oder kraftschlüssig bzw. durch Klebung oder Eingießen. Anstelle von diskreten Komponenten aus Drahtwindungen ist es auch möglich, Spulen aufzudrucken. Die hier nur schematisch dargestellten Spulen 11, 12 können beispielsweise als Flachspulen ausgeführt sein und, als diskrete Bauteile, in eine umfänglich den Zapfen 6A bzw. die Aufnahme 6B umgebenden Aussparung (nicht näher gezeigt) in den Kettenlaschen 5 integriert sein.

Die Spulen 11, 12 einer Erkennungseinheit 10 sind so angeordnet, dass eine gewünschte bzw. bestimmungsgemäße induktive Kopplung (Gegeninduktion) erzielt wird. Die Spulen 11, 12 sind insbesondere durch geeignete Spulengeometrie und aufgrund der fest vorgegebenen Ausrichtung zur Nominalachse A, hier koaxial zur Nominalachse A fluchtend, miteinander so induktiv gekoppelt, dass ein relativ hoher Kopplungsfaktor (k) vorliegt, z.B. mit betragsmäßigem Absolutwert ABS(k)≥0,5 . Der Kopplungsfaktor (k) hängt insbesondere von einer axial fluchtenden Relativlage der Spulen 11, 12 ab. Jede Erkennungseinheit 10 erlaubt es, eine Veränderung des Kopplungsfaktors (k) bzw. der Qualität der induktiven Signalübertragung gegenüber einem nominalen Kopplungsfaktor (k) bzw. nominaler Signalübertragung messtechnisch zu erfassen. Referenzwerte hierfür können z.B. im Neuzustand eingemessen bzw. eingelernt werden oder bedarfsweise durch Anpassung voreingestellter Parameter (z.B. in Form eines Graphen, einer Skalierung, Funktionsparameter oder dgl.) verändert werden.

Erfindungsgemäß verändert sich bei verschleißbedingtem Auftreten von radialem und/oder axialem Spiel in der jeweiligen Gelenkverbindung aus Zapfen 6A bzw. Aufnahmen 6B zwischen zwei verbundenen Kettenlaschen 5 (und damit der Kettenglieder) die Güte der berührungslosen Kopplung der betroffen Erkennungseinheit 10, in FIG.3 die induktive Kopplung bzw. der Kopplungsfaktor (k) zwischen zwei gekoppelten Spulen 11, 12.

Radiales Spiel entsteht und wächst z.B. mit fortschreitender Abnutzung bzw. Abrieb der zusammenwirkenden Gleitflächen von Zapfen 6A bzw. Aufnahme 6B. Damit entstehen meist mit dem Dauerbetrieb ansteigende Fluchtungsfehler im Schwenkgelenk und somit zwischen beiden Spulen 11, 12 einer Erkennungseinheit 10, die jeweils an einer von beiden verbundenen Kettenlaschen ortsfest sind. Derartige Abweichungen gegenüber der Nominallage im Neuzustand verändern den Kopplungsfaktor (k). So erfolgt in Funktion von auftretendem Gelenkverschleiß eine Änderung der Kopplung, die als Änderung eines Ausgangssignals gegenüber einem Sollsignalbereich messtechnisch erfassbar ist. Beim Verfahren der Energieführungskette 1 hin- und zurück entstehen zudem sprunghaft wechselnde, mit zunehmendem Verschleiß stärker ausgeprägte Fluchtungs-Abweichungen, je nachdem, ob Schub- oder Zugkraft ausgeübt wird, die sich mit einem geeigneten elektronischen Filter, z.B. mittels DSP, zuverlässig gegenüber dem Sollsignal und auch Signalschwankungen (z.B. wegen Herstellungstoleranzen neuwertiger Gelenkverbindungen) diskriminieren lassen.

Auch eine unerwünschte Vergrößerung des axialen Abstands zwischen den Spulen 11, 12 ist gut feststellbar, da auch das axiale Spaltmaß den Kopplungsfaktor (k) beeinflusst. Unerwünschtes Axialspiel kann z.B. bei Schaden an den Kettenlaschen 5 oder übermäßiger Kraft in den Laschensträngen (z.B. durch ein Störobjekt im Verfahrweg in der Energieführungskette 1 oder Fremdeinwirkung an einer Führungsrinne usw.) auftreten. Eine zugeordnete Erkennungseinheit 10 kann auch unerwünschte Trennung des Gelenks aus Zapfen 6A und Aufnahme 6B erkennen.

Erkennungseinheiten 10 mit induktiv gekoppelten Spulen 11, 12 gemäß FIG.3 können über eine Mehrzahl Kettenlaschen 5 hintereinander geschaltet bzw. in Kaskade geschaltet sein, um ein Eingangssignal vom Eingang (vgl. IN in FIG.7) zum Ausgang (vgl. OUT in FIG.7) zu übertragen. Dazu sind die erste Spule 11 und die zweite Spule 12 in derselben Kettenlasche 5, wie FIG.3 zeigt, über in die Kettenlasche 5 integrierte elektrische Leiter 13 zu einem Kreis verbunden. Ein Vorteil der induktiven Kaskade mehrerer Erkennungseinheiten 10 ist, dass sich verschleißbedingte radiale Abweichungen von der Nominalachse A mehrerer zusammenwirkender Paare aus Spulen 11, 12 additiv auf das Ausgangsignal auswirken. Dies vereinfacht die Erkennung. Die Erfahrung zeigt, dass Gelenkverschleiß über mehrere aufeinanderfolgende Kettenglieder 5 - zumindest im Längsabschnitt mit der stärksten Zug-/Schubkraftbelastung - selten isoliert an einzelnen Gelenken 6A, 6B, sondern meist in ähnlichem Maße über mehrere Gelenke 6A, 6B auftritt. Somit kommt es auf eine einzelne Gelenkverbindung 6A, 6B oft nicht an, d.h. es lässt sich die Veränderung des Kopplungsfaktors (k) zwischen gekoppelten Spulen 11, 12 bei verschleißbedingt übermäßigem radialen und/oder axialen Spiel über mehrere Gelenke mit einer Kaskade von Erkennungseinheiten 10 auch zuverlässiger auswerten. Beide Spulen 11, 12 einer Erkennungseinheit 10 (bzw. der ausgerüsteten Kettenglieder 5) können gleichsinnig oder gegensinnig gewickelte Luftspulen (vgl. FIG.7) sein und einen Luft-Übertrager bilden.

FIG.4 zeigt ein weiteres Ausführungsbeispiel einer Erkennungseinheit 20 mit jeweils zugeordneten flach bauenden magnetischen Topfkern-Hälften 14A, 14B für jede der Spulen 11, 12, wie schematisch in FIG.4 angedeutet. Jede Topfkern-Hälfte 14A, 14B hat dabei eine zylindrische Aufnahme (nicht gezeigt) für die zugehörige Spule 11, 12 und ist aus weichmagnetischem Werkstoff hergestellt. Die Magnet-Topfkern-Hälften 14A, 14B haben eine Mittelachse und sind ebenfalls zur Nominalachse A an den Kettenlaschen 5 befestigt. Die Topfkern-Hälften 14A, 14B liegen mit einem technisch minimalen Luftspalt koaxial gegenüber, wobei der Luftspalt dem zum Verschwenken notwendigen Spiel zwischen den überlappenden Endbereichen der Kettenlaschen 5 entspricht. Eine vergrößerte Darstellung einer Erkennungseinheit 20 mit Spulen 11, 12 in jeweiligen Topfkern-Hälften 14A, 14B ist schematisch in FIG.8 gezeigt. Mit Magnetkernen lässt sich der Magnetfluss und der nominale Kopplungsfaktor erhöhen, sodass geringfügige Abweichungen leichter erfassbar sind (vgl. relativer Messfehler). Zudem können die Abmessungen der Spulen 11, 12 reduziert werden. Kompakte Erkennungseinheiten 20 mit klein bauenden Topfkernhälften 14A, 14B können z.B. in die gegenüberliegenden Stirnseiten der Zapfen 6A bzw. bodenseitige Zentriervorsprünge der Aufnahmen 6B (vgl. FIG.2B) integriert werden.

In der weiteren Ausführungsform der Erkennungseinheiten 30 nach FIG.5 ist lediglich ein zylindrischer magnetischer Kern 15 koaxial zur Nominalachse A, z.B. mittig vorstehend in der Aufnahme 6B befestigt. Die Spulen 51, 52 einer Erkennungseinheit 30 nach FIG.5 sind hier mit der Spulenachse radial zur Nominalachse A und räumlich möglichst nahe am Kern 15 angeordnet. Diese Anordnung erlaubt es, steigendes Radialspiel in der Gelenkverbindung aus Zapfen 6A und Aufnahme 6B wegen einhergehender Änderung des radialen Luftspalts zwischen zumindest einer der Spulen 51, 52 und dem Kern 15 zu erkennen. Auch mit dieser Anordnung wird vorzugsweise eine Kaskade mehrerer Erkennungseinheiten 30 vorgesehen. In der Ebene der Seitenansicht der Kettenlasche 5 betrachtet liegen die Achsen der Spulen 51, 52 vorzugsweise in Strecklage etwa parallel bzw. sodass im Umlenkbogen 4 keine nennenswert stärkere magnetische Kopplung entsteht.

Als weitere Variante analog zu FIG.5 kann ein kompakter Permanentmagnet 15 koaxial zur Nominalachse am Zapfen 6A der einen Kettenlasche 5 angeordnet werden, dessen Lage mittels eines Hall-Sensors (nicht gezeigt) an der bzw. um die Aufnahme 6B der anderen Kettenlasche 5 überwacht wird, um Lageverschiebungen festzustellen.

FIG.6 zeigt beispielhaft eine hinsichtlich der Anordnung mit FIG.3-5 vergleichbare Lösung. In FIG.6 sind beispielhaft lediglich zwei kapazitiv arbeitende Erkennungseinheiten 40 vorgesehen, die je zwei z.B. kreisscheibenförmige Kopplungs-Elektroden 41, 42 aufweisen. Die erste Elektrode 41 ist auch hier an einer Kettenlasche 5 koaxial zur Nominalachse A befestigt. Die zweite Elektrode 42 ist an der angrenzenden Kettenlasche 5 ebenfalls koaxial zur Nominalachse A befestigt. Die Elektroden 41, 42 sind hier zur Signalübertragung kapazitiv gekoppelt. Eine Veränderung der kapazitiven Kopplung wird auch bei den Erkennungseinheiten 40 durch verschleißbedingtes radiales Spiel oder auch durch axiales Spiel in der Gelenkverbindung aus Zapfen 6A und Aufnahme 6B bewirkt. Erkennungseinheiten 40 mit kapazitiver Kopplung kommen in Betracht, wenn eine Kaskade über eine Vielzahl Kettenglieder bzw. Kettenlaschen 5 unerwünscht oder nicht erforderlich ist. Es können bspw. je zwei leitend verbundene erste Elektroden 41 zusammen mit zwei leitend verbundenen zweiten Elektroden 42 einen Kondensator bilden, dessen Kapazität gemessen wird. Mit kapazitivem Prinzip arbeitende Erkennungseinheiten 40 bauen leichter und erfordern in der Regel weniger Volumen. Ein Aufbringen in additiven Verfahren oder durch Aufdrucken wäre zudem einfacher.

Auch eine Anordnung mit jeweils nur einer induktiven Erkennungseinheit 10; 20; 30 oder jeweils nur einer kapazitiven Erkennungseinheit 40 an ausgewählten, voneinander entfernten Kettengliedern oder nur einem Kettenglied der Energieführungskette 1 liegt im Rahmen der Erfindung.

FIG.7 veranschaulicht für die Beispiele in FIG.3-5 und FIG.10 unterschiedliche Windungszahlen n, n+x für die erste Spule 11 bzw. 51 und die zweite Spule 12 bzw. 52. Das Windungsverhältnis n+x/n zwischen den Spulen 11, 12; 51, 52 kann so gewählt sein, dass ohmsche Spannungsverluste in der Kaskade zumindest teilweise kompensiert werden, sodass auch über eine relativ große Anzahl Kettenglieder (FIG.11) eine Kaskaden-Schaltung von Erkennungsvorrichtungen 10; 20; 30; 50 ermöglicht wird. Zudem veranschaulicht FIG.7 den Eingang IN der Schaltungsanordnung aus kaskadierten Erkennungsvorrichtungen 10; 20; 30; 50, an welchem eine vorgegebene Wechselspannung, z.B. eine Sinusspannung als Referenzsignal angelegt wird. Durch die induktive Übertragung bzw. magnetische Kopplung zwischen den Spulen 11, 12 bzw. 51, 52 ist am Ausgang OUT ein Ausgangssignal abgreifbar. Die Spannungsamplitude am Ausgang OUT hängt insbesondere von den jeweiligen Kopplungsfaktoren k(n) der Anzahl n verketteter bzw. kaskadierter Erkennungsvorrichtungen 10; 20; 30; 50 und somit auch von verschleißbedingt auftretendem unerwünschten Spiel in den Gelenkverbindungen aus Zapfen 6A und Aufnahmen 6B ab. Das Ausgangssignal wird mit einer Auswertungseinheit 90, vgl. FIG.9, ggf. gefiltert und mit einem vorbestimmten, z.B. bei Inbetriebnahme angelernten, Sollbereich in geeigneter Weise verglichen. Zunehmender Verschleiß der Gelenkverbindungen 6A-6B wird so, insbesondere als Reduzierung der Spannungsamplitude des Ausgangssignals am Ausgang OUT, für die Auswertungseinheit 90 elektrotechnisch messbar.

FIG.9 veranschaulicht als Blockschema eine drahtgebundene Verbindung der Auswertungseinheit 90 über eine Signalleitung 93 mit einer Kaskade aus einer Anzahl n Erkennungseinheiten 10 an ausgewählten Kettengliedern 5 im ersten Drittel der Energieführungskette 1 am Mitnehmer M. Die Signalleitung 93 ist in der Energieführungskette 1 mitgeführt. Auch eine drahtlose Verbindung, z.B. über ein geeignetes Funkmodul ist möglich.

FIG.10 zeigt eine Ausführungsform für eine Erkennungsvorrichtung 50, die eine Nachrüstung bestehender Energieführungsketten 1 erlaubt, bzw. keine Veränderung an den Kettenlaschen 5 erfordert. Hierbei sind spezielle Innenteile 123 vorgesehen, die gegenüberliegende Endbereiche 124, 125 aufweisen, mit einer Aufnahme für jeweils eine zugeordnete Spule 11, 12 nach dem Prinzip aus FIG.3 oder FIG.4. Die Innenteile 123 sind in Draufsicht leicht gekröpft, sodass die Endbereiche 124, 125 mit minimalem Axialabstand auf der Nominalachse A gegenüberliegend aneinandergrenzen, um einen hohen Kopplungsgrad bzw. Kopplungsfaktor (k) der Spulen 11, 12 zu erzielen. Die Innenteile 123 sind davon abgesehen ähnlich an sich bekannten Trennstegen zur horizontalen Aufteilung des Innenraums bzw. Aufnahmeraums in den Kettengliedern (vgl. FIG.11) gestaltet, insbesondere mit gegenüberliegenden Befestigungsbereichen 126, jeweils am Kopf und Fuß der Innenteile 123, die ein stabiles festes Verrasten zwischen den Querstegen 7 (vgl. FIG.11) und so die stabile, in Längsrichtung L ortsfeste Lagefixierung in der Energieführungskette 1 erlauben. Diese Bauform erlaubt das Nachrüsten in einer Vielzahl von bestehenden Energieführungsketten 1, ohne die Gestaltung bereits bestehender Bauteile verändern zu müssen.

FIG.11 zeigt rein beispielhaft ein einzelnes Kettenglied aus zwei spiegelsymmetrischen Seitenlaschen 5A, 5B, die über zwei parallele Querstege 7 fest miteinander verbunden sind. Die Erfindung ist auch auf andersartige Leitungsführungen, z.B. mit nur einem einzigen Laschenstrang, anwendbar (vgl. EP1340299B1).

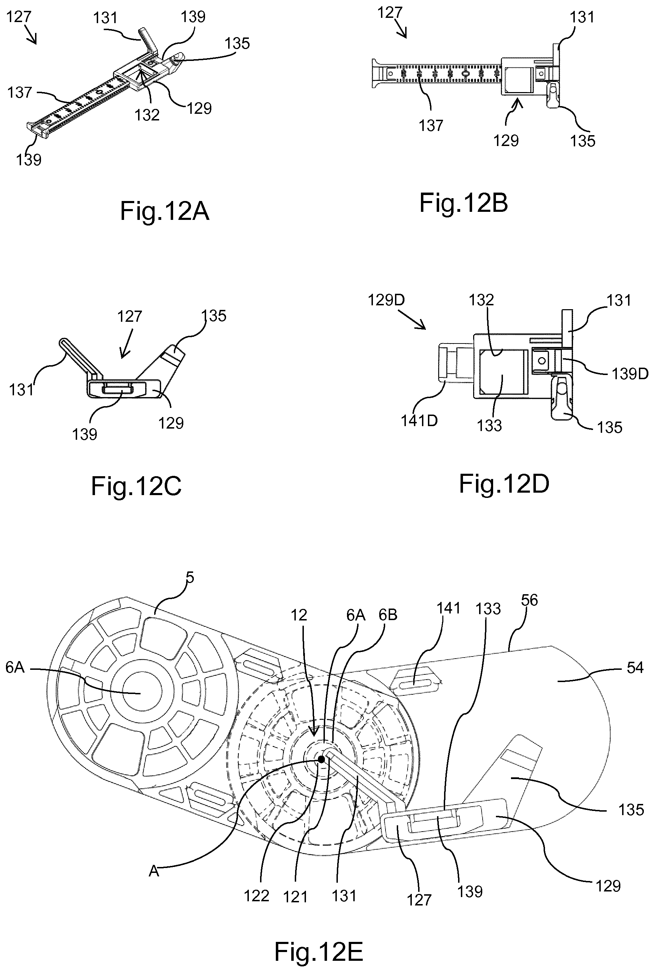

FIG.12A-D zeigen ein Konzept zur Befestigung einer Erkennungseinheit 120 an den Kettengliedern bzw. Seitenlaschen unter Ausnutzung eines Querstegs. Das Konzept ist in FIG.12A-D speziell für die Erkennungseinheit 120 nach FIG.12E dargestellt, jedoch analog auch für eine Erkennungseinheit 10; 20; 30; 40; 50 nach FIG.1-9 geeignet.

FIG.12A-12C zeigen einen speziellen Quersteg 127, der zur Befestigung und vorgegebenen Ausrichtung einer von zwei wesentlichen elektrischen Sensor-Komponenten der Erkennungseinheit 120 verwendet werden kann. Der Quersteg 127 weist an einem Längsende eine Halterung 129 auf, welche Bestandteile der Erkennungseinheit 120 aufnimmt. Die Halterung 129 umfasst einen Haltearm 131 für eine Komponente 121 (vgl. FIG.12E) und eine Aufnahme 132 für eine elektronische Schaltung 133, mit der die Komponente 121 verbunden ist. Der Haltearm 131 erstreckt sich senkrecht zur Längserstreckung des Querstegs 127 und hat ein freies Ende, an dem die Komponente 121 angebracht ist. Der Quersteg 127 hat an seinen beiden Längsenden Rastausnehmungen 139 zum Befestigen an herkömmlichen Rastnasen 141 der Kettenlaschen 5A, 5B auf (vgl. FIG.11).

Die Halterung 129 kann einstückig mit dem Quersteg 127 hergestellt sein, wie in FIG. 12A-12C dargestellt. Alternativ kann die Halterung 129 auch als separates Bauteil zum Aus- bzw. Nachrüsten von herkömmlichen Querstegen 7 (vgl. FIG. 11) ausgeführt sein, um am Quersteg 7 befestigt zu werden, insbesondere an der Innenseite zum Aufnahmeraum für Leitungen, bspw. form- und/oder kraftschlüssig angebracht (nicht gezeigt).

FIG.12D zeigt als Variante ein Beispiel einer Halterung 129D für bestehende Querstege 7. Die Halterung 129D hat an einem Längsende eine Rastnase 141D baugleich zur herkömmlichen Rastnase 141 einer Seitenlasche 5. Die Rastnase 141D erlaubt das Befestigen eines herkömmlichen Querstegs 7 mit korrespondierender Rastausnehmung 139. Am anderen Längsende der Halterung 129D ist eine Rastausnehmung 139D baugleich zur herkömmlichen Rastausnehmung 139 am Quersteg 7 vorgesehen. So kann die Halterung 129D als "Adapter" bzw. Zwischenstück zum Verbinden eines Querstegs 7 mit der Rastnase 141 der Kettenlasche 5 eingesetzt werden. Die Abmessung der Halterung 129 in Längsrichtung des Querstegs kann dabei dem Rastermaß herkömmlicher Querstege 7 (Längenunterschied zwischen aufeinanderfolgenden Quersteg-Baugrößen) entsprechen, sodass ein kürzerer Quersteg 7 mit der Halterung 129D einer Standardlänge des nächstgrößeren, gegenüberliegenden Querstegs entspricht.

Halterungen 129; 129D nach dem Prinzip aus FIG.12A-12D können für alle hier vorgeschlagenen Erkennungseinheiten 10; 20; 30; 40; 50; 120 eingesetzt werden. FIG.12E zeigt die Halterung 129 bzw. 129D befestigt an einer von zwei gelenkig miteinander verbundenen Kettenlaschen 5 in innerer Seitenansicht (verdeckte Elemente gestrichelt). Der Haltearm 131 erstreckt sich mit zwei Richtungskomponenten senkrecht zur Längserstreckung des Querstegs 127 und nach innen in den mittleren Höhenbereich zwischen den Schmalseiten 56 der Lasche, d.h. etwa parallel zur Breitseite 54 der Kettenlasche. Der freie Endbereich des Haltearms 131 ist hier mit einem leichten radialen Abstand bzw. exzentrischen Versatz zur Nominalachse A angeordnet bzw. ausgerichtet, mit der Nominalachse A senkrecht zu den Breitseiten 54 der Kettenlaschen 5 (und ca. zur Zeichnungsebene der FIG. 12E).

FIG.12E veranschaulich ferner eine Erkennungseinheit 120 die nach dem Prinzip eines Hall-Sensors ausgebildet ist. Diese umfasst ein Hall-Element 121 als eine von zwei Haupt-Komponenten des Hall-Sensors, und einen Permanentmagneten 122 als zweite HauptKomponente des Hall-Sensors 120. Der Permanentmagnet 122 ist z.B. kreisscheibenförmig ausgebildet, mit einer Symmetrieachse des Magnetfelds (durch beide Magnetpole). Der Permanentmagnet 122 ist hier in einer Aufnahme 6B der einen Kettenlasche 5 (in FIG. 12E links) befestigt, z.B. form- und/oder kraftschlüssig bzw. durch Klebung oder Eingießen, und so ausgerichtet, dass sein Magnetfeld koaxial und symmetrisch zur Nominalachse A der Gelenkverbindung ausgerichtet ist.

Das mit dem Permanentmagneten 122 zusammenwirkende Hall-Element 121 ist am zweiten Kettenglied, nämlich am freien Ende des Haltearms 131 befestigt. Die Anordnung und Ausrichtung erfolgt derart, dass das Hall-Element 121 mit seiner Wirkfläche in geeigneter Weise zum Magnetfeld des Permanentmagneten 122 ausgerichtet ist, zumindest bei einer Nominallage im Neuzustand der Energieführungskette 1. Die Wirkfläche des Hall-Elements 121 kann beispielsweise senkrecht zur Symmetrieachse des Magnetfeldes orientiert sein. Weiterhin ist die Anordnung so gewählt, dass die Nominalachse A der Gelenkverbindung mit einem geringen Versatz bzw. radialen Abstand zu einem Flächenschwerpunkt der Wirkfläche des Hall-Elements 121 verläuft. Die elektronische Schaltung 133 des Hall-Sensors ist in der Aufnahme 132 der Halterung 129 des Querstegs 127 befestigt. Die Halterung 129 hat ferner eine Führung 135 für die Anschlussleitung der elektronischen Schaltung 133 an Auswerteeinheit 90. Die Verbindungsleitung zum Hall-Element ist im Haltearm 131 geführt. Im Betrieb ist das Hall-Element 121 von einem Betriebsstrom durchflossen, wobei der Stromfluss, zumindest bei Nominallage, z.B. senkrecht zu Feldlinien des Magneten 122 verläuft. Die durch das Magnetfeld verursachte Hall-Spannung an dem Hall-Element 121 wird durch die elektronische Schaltung 133 des Hall-Sensors messtechnisch erfasst und ausgewertet oder z.B. an die Auswertungseinheit 90 weitergegeben. Mit fortschreitender Abnutzung der Gleitflächen des Zapfens 6A bzw. der Aufnahme 6B tritt, wie oben beschrieben, zunehmend ein Fluchtungsfehler im Schwenkgelenk auf, sodass die Position der Nominalachse A bzw. die Lage des Magneten 122 relativ zu dem Hall-Element 121 von der Nominallage im Neuzustand abweicht, etwa durch Änderung des axialen und/oder des radialen Abstandes des Hall-Elements zu dem Magneten und/oder der Ausrichtung des Hall-Elements relativ zum Magnetfeld. Dies bewirkt eine Veränderung der Hall-Spannung am Hall-Element 121, die durch die elektronische Schaltung 133 festgestellt wird oder an die Auswertungseinheit 90 weitergeleitet wird.

Die sonstige Gestaltung der Kettenlaschen 5 kann der Lehre aus EP2010800B1 entsprechen, auf die insoweit Bezug genommen wird. Hierbei sind die Erkennungseinheit(en) 120 vorzugsweise an Kettenlaschen 5 ohne Laufrollen vorgesehen.

Es können mehrere Gelenkverbindungen einer Energieführungskette 1 mit einem Hall-Sensor als Erkennungseinheit 120 ausgestattet sein, wobei die Hall-Sensoren verschiedener Kettenglieder mit einer Auswertungseinheit 90 zur besseren Signal-Diskriminierung bzw. Verschleißerkennung verbunden sind.

### Bezugszeichenliste

- 1: Energieführungskette
- 2: Obertrum
- 3: Untertrum
- 4: Umlenkbogen
- 5: Kettenlasche
- 5A, 5B: Seitenlaschen (Kettenglied)
- 54: Breitseiten der Kettenlaschen
- 56: Schmalseiten der Kettenlaschen
- 6A: Zapfen
- 6B: Aufnahme
- 7, 127: Quersteg
- 8: Laufrolle
- 9: Lauffläche
- 10; 20; 30; 40; 50; 120: Erkennungseinheit
- 11, 51: erste Spule
- 12, 52: zweite Spule
- 13: Leiter
- 14A, 14B: Topfkernhälfte
- 15: Magnetkern
- 41: erste Kopplungs-Elektrode
- 42: zweite Kopplungs-Elektrode
- 90: Auswertungseinheit
- 93: Signalleitung
- 121: Hall-Element
- 122: Magnet
- 123: Innenteil
- 124, 125: Endbereich
- 126: Befestigungsbereich
- 129; 129D: Halterung
- 131: Haltearm
- 132: Aufnahme
- 133: elektronische Schaltung
- 135: Führung
- 137: Positionsmarkierung
- 139: Rastausnehmung
- 141: Rastnase
- A: Nominalachse
- F: Festpunkt
- IN: Signaleingang
- OUT: Signalausgang
- M: Mitnehmer (Maschine)
- L: Längsrichtung

## Patentansprüche

1. Energieführungskette (1) mit Verschleißerkennung, umfassend eine Anzahl Kettenglieder, die zur geschützten Führung von Leitungen, wie Kabeln, Schläuchen oder dergleichen, zwischen einem ersten Anschlussende (F) und einem dazu relativbeweglichen zweiten Anschlussende (M) gestaltet sind, wobei jedes Kettenglied mindestens eine Kettenlasche (5) aufweist und Kettenlaschen (5) benachbarter Kettenglieder in Längsrichtung (L) jeweils durch eine Gelenkverbindung, insbesondere mit nominaler Schwenkachse (A), miteinander verbunden sind, die insbesondere jeweils einen Zapfen (6A) und eine korrespondierende Aufnahme (6B) umfasst, und
mindestens eine Erkennungseinheit (10, 20, 30, 40, 50, 120) zur Erkennung von Verschleiß an mindestens einem Kettenglied,
**dadurch gekennzeichnet, dass**
die mindestens eine Erkennungseinheit (10, 20, 30, 40, 50, 120) eine erste elektrische Komponente (11, 41, 51, 121) umfasst, die mit vorgegebener Ausrichtung an einem ersten Kettenglied befestigt ist, und eine zweite elektrische Komponente (12, 42, 52, 122 ) umfasst, die mit vorgegebener Ausrichtung an einem benachbarten mit dem ersten Kettenglied gelenkig verbundenen zweiten Kettenglied befestigt ist, wobei die Komponenten berührungslos gekoppelt zusammenwirken, insbesondere induktiv, magnetisch oder kapazitiv, um eine Veränderung der Kopplung bei verschleißbedingtem Auftreten von radialem und/oder axialem Spiel in der Gelenkverbindung zwischen erstem und zweitem Kettenglied zu erfassen.

2. Energieführungskette (1) nach Anspruch 1, **dadurch gekennzeichnet, dass** die mindestens eine Erkennungseinheit (120) als Komponenten einen Magneten (122) sowie ein mit dem Magneten (122) zusammenwirkendes Hall-Element (121) umfasst; insbesondere wobei die Erkennungseinheit (120) eine elektronische Schaltung (133) aufweist und der Magnet (122) eine Hall-Spannung im Hall-Element (121) bewirkt, welche durch die elektronische Schaltung (133) messbar ist, um eine verschleißbedingte Änderung in der Relativlage des Magneten (122) bezüglich des Hall-Elements (121) durch die elektronische Schaltung (133) zu erfassen, wobei vorzugsweise der Magnet (122) eine Symmetrieachse aufweist, welche koaxial zu der nominalen Schwenkachse (A) der Gelenkverbindung angeordnet ist und das Hall-Element (121) exzentrisch zu dieser Symmetrieachse angeordnet ist; wobei besonders bevorzugt der Magnet (122) an einer der Kettenlaschen (5) des ersten Kettenglieds, insbesondere in einer Aufnahme (6B) der Gelenkverbindung, und das Hall-Element (121) an einem Quersteg (127) des zweiten Kettenglieds befestigt ist, insbesondere an einem sich quer zum Quersteg erstreckenden Haltearm (131) des Querstegs (127).

3. Energieführungskette (1) nach Anspruch 1, **dadurch gekennzeichnet, dass** die mindestens eine Erkennungseinheit (10, 20, 30, 50) eine erste Spule (11, 51) als erste Komponente und eine zweite Spule (12, 52) als zweite Komponente umfasst.

4. Energieführungskette (1) nach Anspruch 3, **dadurch gekennzeichnet, dass** die erste (11, 51) und zweite Spule (12, 52), vorzugsweise als Flachspulen ausgeführt, koaxial zur nominalen Schwenkachse (A) der Gelenkverbindung gegenüberliegend angeordnet sind; oder
die erste (11, 51) und zweite Spule (12, 52) als Zylinderspulen ausgeführt sind, die senkrecht zu einer nominalen Schwenkachse (A) der Gelenkverbindung ausgerichtet sind.

5. Energieführungskette (1) nach Anspruch 3 oder 4, **dadurch gekennzeichnet, dass** beide Spulen (11, 51, 12, 52) mindestens einen zugeordneten Magnetkern (15) aufweisen, welcher vorzugsweise koaxial zur nominalen Schwenkachse (A) am ersten oder zweiten Kettenglied befestigt ist.

6. Energieführungskette (1) nach Anspruch 1, **dadurch gekennzeichnet, dass** die mindestens eine Erkennungseinheit (40) eine erste Elektrode (41) als erste Komponente und eine zweite Elektrode (42) als zweite Komponente umfasst, wobei die Elektroden (41, 42) jeweils eine Symmetrieachse aufweisen, welche koaxial zu einer nominalen Schwenkachse (A) der Gelenkverbindung angeordnet ist.

7. Energieführungskette (1) nach einem der Ansprüche 1 bis 6, wobei jede Kettenlasche (5), zur Bildung der Gelenkverbindung zwischen benachbarten Kettengliedern, an einem ersten Endbereich jeweils einen Zapfen (6A) und an einem zweiten Endbereich eine korrespondierende Aufnahme (6B) aufweist,
**dadurch gekennzeichnet, dass** bei mindestens zwei gelenkig verbundenen Kettenlaschen (5), die erste elektrische Komponente am Zapfen (6A) der einen Kettenlasche (5) angeordnet ist; und/oder
die zweite elektrische Komponente an der Aufnahme (6B) der anderen Kettenlasche (5) angeordnet ist.

8. Energieführungskette (1) nach einem der Ansprüche 1 bis 6, insbesondere nach Anspruch 2, wobei jedes Kettenglied zwei gegenüberliegende Kettenlaschen (5A, 5B) umfasst, die einen Aufnahmeraum für Leitungen begrenzen und zumindest einige der gegenüberliegenden Kettenlaschen (5A, 5B) durch Querstege (7) verbunden sind, **dadurch gekennzeichnet, dass** die erste Komponente der mindestens einen Erkennungseinheit (120) an einer der Kettenlaschen (5) des ersten Kettenglieds und die zweite Komponente der mindestens einen Erkennungseinheit (120) an einem Quersteg (127) des mit dem ersten Kettenglied gelenkig verbundenen zweiten Kettenglieds befestigt ist; wobei der Quersteg (127) vorzugsweise eine Halterung (129) mit einem Haltearm (131) aufweist an welchem die zweite Komponente der Erkennungseinheit (120) angebracht ist, wobei der Haltearm (131) sich quer zum Quersteg (127) erstreckt, um die zweite Komponente relativ zur ersten Komponente so zu positionieren, dass die beiden Komponenten zum Erfassen von verschleißbedingtem radialem und/oder axialem Spiel in der Gelenkverbindung zusammenwirken können.

9. Energieführungskette (1), insbesondere Rollenkette für lange Verfahrwege, nach einem der Ansprüche 1 bis 8, wobei die Kettenlaschen (5) als gekröpfte Kettenlaschen mit Zapfen (6A) und korrespondierender Aufnahme (6B) ausgeführt sind, **dadurch gekennzeichnet, dass**
zumindest einige Kettenlaschen (5) Laufrollen (8) zum Abrollen der Energieführungskette (1) aufweisen; und/oder zumindest einige Kettenlaschen (5) eine erste Aussparung koaxial zum Zapfen (6A) für die erste Komponente aufweisen.

10. Energieführungskette (1) nach einem der Ansprüche 1 bis 6, wobei jedes Kettenglied zwei Kettenlaschen (5A, 5B) umfasst, die Kettenlaschen (5A, 5B) gegenüberliegende Laschenstränge bilden, die einen Aufnahmeraum definieren und die Laschenstränge an zumindest jedem zweiten Kettenglied durch die Kettenlaschen (5A, 5B) verbindende Querstege (7) parallel gehalten sind, **dadurch gekennzeichnet, dass** bei mindestens zwei gelenkig verbundenen Kettenlaschen (5) im Aufnahmeraum jeweils ein Innenteil (123) zwischen den Querstegen (7) befestigt ist, wobei die Innenteile (123) zwei axial an der nominalen Schwenkachse (A) der Gelenkverbindung der Kettenlaschen (5) gegenüberliegende Endbereiche (124, 125) aufweisen und am Endbereich (124, 125) des einen Innenteils (123) die erste Komponente befestigt ist und am Endbereich (124, 125) des anderen Innenteils (123) die zweite Komponente befestigt ist.

11. Energieführungskette (1) nach einem der vorstehenden Ansprüche 1 bis 10, **dadurch gekennzeichnet, dass** in einem Längsabschnitt eine Anzahl aufeinanderfolgender Kettenglieder, jeweils eine erste elektrische Komponente und eine zweite elektrische Komponente aufweisen, wobei insbesondere eine serielle Kaskade aus einer Anzahl Erkennungseinheiten (10; 20; 30; 40; 50; 120) vorgesehen ist; wobei die Komponenten vorzugsweise als Spulen (11, 12) ausgeführt sind, und die Spulen einer Kettenlasche (5) eine ungleiche Windungszahl aufweisen, insbesondere mit einem Windungsverhältnis, das Spannungsverluste in der Kaskade zumindest teilweise kompensiert.

12. Erkennungssystem mit einer Energieführungskette nach einem der vorstehenden Ansprüche, **dadurch gekennzeichnet, dass** eine Auswertungseinheit (90) zur Signalauswertung mit der mindestens einen Erkennungseinheit (10; 20; 30; 40; 50; 120), insbesondere mit jeder Erkennungseinheit (10; 20; 30; 40; 50; 120) verbunden ist; wobei vorzugsweise die Auswertungseinheit (90) eingangsseitig die Erkennungseinheit(en) (10; 20; 30; 40; 50) mit einer Referenzspannung, insbesondere Wechselspannung, versorgt, um ausgangsseitig ein Ausgangssignal abzugreifen und/oder einen Speicher mit einem gespeicherten Sollwertbereich für den Nominalbetrieb aufweist und ein von der Erkennungseinheit, insbesondere von mehreren kaskadierten Erkennungseinheiten abgegriffenes elektrisches Signal, vorzugsweise nach Filterung, mit dem Sollwertbereich vergleicht.

13. Kettenlasche (5, 5A, 5B) für eine Energieführungskette (1) mit Verschleißerkennung, mit einem Zapfen (6A) und einer korrespondierenden Aufnahme (6B) zur Bildung von Gelenkverbindungen mit je einer nominalen Schwenkachse (A) zwischen aufeinanderfolgenden Kettengliedern
**dadurch gekennzeichnet, dass**
eine erste elektrische Komponente im Bereich des Zapfens (6A) mit vorgegebener Ausrichtung zur nominalen Schwenkachse (A), insbesondere koaxial zum Zapfen (6A), befestigt ist, und eine zweite elektrische Komponente im Bereich der Aufnahme (6B) mit vorgegebener Ausrichtung zur nominalen Schwenkachse (A), insbesondere koaxial zur Aufnahme (6B), befestigt ist.

## Claims

1. An energy guide chain (1) with wear detection, comprising a number of chain links, which are configured for protected guidance of lines, such as cables, hoses or the like, between a first connection end (F) and a second connection end (M) movable relative thereto, wherein each chain link has at least one link plate (5) and link plates (5) of adjacent chain links are each connected together in the longitudinal direction (L) by an articulated joint, in particular with nominal swivel axis (A), which in particular in each case comprises a pin (6A) and a corresponding receptacle (6B), and at least one detection unit (10, 20, 30, 40, 50, 120) for detecting wear on at least one chain link,
**characterized in that**
the at least one detection unit (10, 20, 30, 40, 50, 120) comprises a first electrical component (11, 41, 51, 121), which is attached with predetermined orientation to a first chain link, and a second electrical component (12, 42, 52, 122 ), which is attached with predetermined orientation to an adjacent second chain link that is articulatedly connected to the first chain link, wherein the components interact in contactlessly coupled manner, in particular inductively, magnetically or capacitively, to sense a change in the coupling in the event of wear-related occurrence of radial and/or axial play in the articulated joint between first and second chain link.

2. The energy guide chain (1) as claimed in claim 1,
**characterized in that** the at least one detection unit (120) comprises as components a magnet (122) and a Hall element (121) interacting with the magnet (122); in particular wherein the detection unit (120) has an electronic circuit (133) and the magnet (122) brings about a Hall voltage in the Hall element (121) which is measurable by the electronic circuit (133), in order for the electronic circuit (133) to sense a wear-related change in the relative position of the magnet (122) with regard to the Hall element (121), wherein the magnet (122) preferably has an axis of symmetry which is arranged coaxially with the nominal swivel axis (A) of the articulated joint and the Hall element (121) is arranged eccentrically relative to this axis of symmetry; most preferably wherein the magnet (122) is attached to one of the link plates (5) of the first chain link, in particular in a receptacle (6B) of the articulated joint, and the Hall element (121) is attached to a crosspiece (127) of the second chain link, in particular to a retaining arm (131) of the crosspiece (127) extending transversely of the crosspiece.

3. The energy guide chain (1) as claimed in claim 1,
**characterized in that** the at least one detection unit (10, 20, 30, 50) comprises a first coil (11, 51) as first component and a second coil (12, 52) as second component.

4. The energy guide chain (1) as claimed in claim 3,
**characterized in that** the first (11, 51) and second (12, 52) coils, preferably embodied as flat coils, are arranged opposite one another coaxially with the nominal swivel axis (A) of the articulated joint; or the first (11, 51) and second (12, 52) coils are embodied as cylindrical coils, which are oriented perpendicular to a nominal swivel axis (A) of the articulated joint.

5. The energy guide chain (1) as claimed in claim 3 or 4,
**characterized in that** the two coils (11, 51, 12, 52) have at least one associated magnetic core (15), which is preferably attached to the first or second chain link coaxially relative to the nominal swivel axis (A).

6. The energy guide chain (1) as claimed in claim 1,
**characterized in that** the at least one detection unit (40) comprises a first electrode (41) as first component and a second electrode (42) as second component, wherein the electrodes (41, 42) each have an axis of symmetry, which is arranged coaxially with a nominal swivel axis (A) of the articulated joint.

7. The energy guide chain (1) as claimed in one of claims 1 to 6, wherein, to form the articulated joint between adjacent chain links, each link plate (5) has a pin (6A) at a first end region and a corresponding receptacle (6B) at a second end region, **characterized in that,** in the case of at least two articulatedly connected link plates (5), the first electrical component is arranged on the pin (6A) of the one link plate (5), and/or the second electrical component is arranged on the receptacle (6B) of the other link plate (5).

8. The energy guide chain (1) as claimed in one of claims 1 to 6, in particular as claimed in claim 2, wherein each chain link comprises two opposing link plates (5A, 5B), which define a receiving space for lines, with at least some of the opposing link plates (5A, 5B) being connected by crosspieces (7), **characterized in that** the first component of the at least one detection unit (120) is attached to one of the link plates (5) of the first chain link and the second component of the at least one detection unit (120) is attached to a crosspiece (127) of the second chain link connected articulatedly to the first chain link, wherein the crosspiece (127) preferably has a holder (129) with a retaining arm (131) on which the second component of the detection unit (120) is mounted, wherein the retaining arm (131) extends transversely of the crosspiece (127), in order to position the second component relative to the first component in such a way that the two components may interact to sense wear-related radial and/or axial play in the articulated joint.

9. The energy guide chain (1), in particular roller chain for long travel paths, as claimed in one of claims 1 to 8, wherein the link plates (5) are embodied as offset link plates with pin (6A) and corresponding receptacle (6B), **characterized in that** at least some link plates (5) have rollers (8) to allow the energy guide chain (1) to roll; and/or at least some link plates (5) have a first recess coaxial with the pin (6A) for the first component.

10. The energy guide chain (1) as claimed in one of claims 1 to 6, wherein each chain link comprises two link plates (5A, 5B), the link plates (5A, 5B) forming opposing strings of plates which define a receiving space, and the strings of plates being held in parallel at at least every second chain link by crosspieces (7) connecting the link plates (5A, 5B),
**characterized in that,** in the case of at least two articulatedly connected link plates (5), an internal part (123) is in each case attached in the receiving space between the crosspieces (7), wherein the internal parts (123) have two axially opposing end regions (124, 125) on the nominal swivel axis (A) of the articulated joint of the link plates (5) and at the end region (124, 125) of the one internal part (123) the first component is attached and at the end region (124, 125) of the other internal part (123) the second component is attached.

11. The energy guide chain (1) as claimed in one of the preceding claims 1 to 10, **characterized in that** in a longitudinal portion a number of successive chain links in each case have a first electrical component and a second electrical component, wherein in particular a serial cascade consisting of a number of detection units (10; 20; 30; 40; 50; 120) is provided; wherein the components preferably are embodied as coils (11, 12), and the coils of a link plate (5) have an unequal number of turns, in particular with a turns ratio which at least partly compensates voltage losses in the cascade.

12. A detection system having an energy guide chain as claimed in one of the preceding claims, **characterized in that** an evaluation unit (90) is connected for signal evaluation with the at least one detection unit (10; 20; 30; 40; 50; 120), in particular with each detection unit (10; 20; 30; 40; 50; 120); preferably wherein the evaluation unit (90) supplies the detection unit(s) (10; 20; 30; 40; 50) with a reference voltage, in particular AC voltage, on the input side, in order to pick off an output signal on the output side and/or has a memory with a stored setpoint range for nominal operation and compares an electrical signal picked off from the detection unit, in particular from a plurality of cascaded detection units, preferably after filtering, with the setpoint range.

13. A link plate (5, 5A, 5B) for an energy guide chain (1) with wear detection, with a pin (6A) and a corresponding receptacle (6B) for forming articulated joints each with a nominal swivel axis (A) between successive chain links **characterized in that** a first electrical component is attached in the region of the pin (6A) with a predetermined orientation relative to the nominal swivel axis (A), in particular coaxially with the pin (6A), and a second electrical component is attached in the region of the receptacle (6B) with a predetermined orientation relative to the nominal swivel axis (A), in particular coaxially with the receptacle (6B).

## Revendications

1. Chaîne porte-câbles (1) à détection d'usure, comprenant un certain nombre de maillons de chaîne qui sont conçus pour le guidage protégé de conduites, telles que des câbles, des tuyaux ou similaires, entre une première extrémité de raccordement (F) et une deuxième extrémité de raccordement (M) mobile par rapport à celle-ci, chaque maillon de chaîne présentant au moins une patte de chaîne (5) et les pattes de chaîne (5) de maillons de chaîne adjacents étant reliées entre elles dans la direction longitudinale (L) par une liaison articulée, en particulier avec un axe de pivotement nominal (A), qui comprend en particulier un tenon (6A) et un logement correspondant (6B), et au moins une unité de détection (10, 20, 30, 40, 50, 120) pour détecter l'usure d'au moins un maillon de chaîne,
**caractérisée en ce que**
ladite au moins une unité de détection (10, 20, 30, 40, 50, 120) comprend un premier composant électrique (11, 41, 51, 121) fixé avec une orientation prédéfinie sur un premier maillon de chaîne, et un deuxième composant électrique (12, 42, 52, 122) fixé avec une orientation prédéterminée sur un deuxième maillon de chaîne adjacent relié de manière articulée au premier maillon de chaîne, les composants coopérant de manière couplée sans contact, en particulier de manière inductive, magnétique ou capacitive, afin de détecter une modification du couplage en cas d'apparition, due à l'usure, d'un jeu radial et/ou axial dans la liaison articulée entre le premier et le deuxième maillon de chaîne.

2. Chaîne porte-câbles (1) selon la revendication 1,
**caractérisée en ce que** ladite au moins une unité de détection (120) comprend comme composants un aimant (122) ainsi qu'un élément Hall (121) coopérant avec l'aimant (122); en particulier l'unité de détection (120) comportant un circuit électronique (133) et l'aimant (122) provoquant dans l'élément Hall (121) une tension Hall qui peut être mesurée par le circuit électronique (133) afin de détecter, par le circuit électronique (133), une modification due à l'usure de la position relative de l'aimant (121) par rapport à l'élément Hall (121), l'aimant (122) présentant de préférence un axe de symétrie qui est disposé coaxialement à l'axe de pivotement nominal (A) de la liaison articulée et l'élément Hall (121) est disposé de manière excentrique par rapport à cet axe de symétrie; l'aimant (122) étant de préférence fixé à l'une des pattes de chaîne (5) du premier maillon de chaîne, en particulier dans un logement (6B) de la liaison articulée, et l'élément Hall (121) étant fixé sur une traverse (127) du deuxième maillon de chaîne, en particulier sur un bras de retenue (131) de la traverse (127) s'étendant transversalement à la traverse.

3. Chaîne porte-câbles (1) selon la revendication 1,
**caractérisée en ce que** ladite au moins une unité de détection (10, 20, 30, 50) comprend une première bobine (11, 51) comme premier composant et une deuxième bobine (12, 52) comme deuxième composant.

4. Chaîne porte-câbles (1) selon la revendication 3, **caractérisée en ce que** la première (11, 51) et la deuxième bobine (12, 52), de préférence réalisées sous forme de bobines plates, sont disposées de manière coaxiale par rapport à l'axe de pivotement nominal (A) de la liaison articulée, en vis-à-vis l'une de l'autre; ou la première (11, 51) et la deuxième bobine (12, 52) sont réalisées sous forme de bobines cylindriques qui sont orientées perpendiculairement à un axe de pivotement nominal (A) de la liaison articulée.

5. Chaîne porte-câbles (1) selon la revendication 3 ou 4,
**caractérisée en ce que** les deux bobines (11, 51, 12, 52) comportent au moins un noyau magnétique associé (15) qui est de préférence fixé de manière coaxiale à l'axe de pivotement nominal (A) sur le premier ou le deuxième maillon de chaîne.

6. Chaîne porte-câbles (1) selon la revendication 1,
**caractérisée en ce que** ladite au moins une unité de détection (40) comprend une première électrode (41) comme premier composant et une deuxième électrode (42) comme deuxième composant, les électrodes (41, 42) présentant chacune un axe de symétrie qui est disposé coaxialement à un axe de pivotement nominal (A) de la liaison articulée.

7. Chaîne porte-câbles (1) selon l'une quelconque des revendications 1 à 6, dans laquelle chaque patte de chaîne (5) destinée à former la liaison articulée entre des maillons de chaîne adjacents, présente, sur une première zone d'extrémité, un tenon (6A) et, sur une deuxième zone d'extrémité, un logement (6B) correspondant, **caractérisée en ce que,** dans le cas d'au moins deux pattes de chaîne articulés (5), le premier composant électrique est disposé sur le tenon (6A) d'une patte de chaîne (5); et/ou
le deuxième composant électrique est disposé sur le logement (6B) de l'autre patte de chaîne (5).

8. Chaîne porte-câbles (1) selon l'une quelconque des revendications 1 à 6, en particulier selon la revendication 2, chaque maillon de chaîne comprenant deux pattes de chaîne opposées (5A, 5B) qui délimitent un espace de réception pour des câbles et au moins certaines des pattes de chaîne opposées (5A, 5B) étant reliées par des traverses (7), **caractérisée en ce que** le premier composant de ladite au moins une unité de détection (120) est fixé à l'une des pattes de chaîne (5) du premier maillon de chaîne et le deuxième composant de ladite au moins une unité de détection (120) est fixé à une traverse (127) du deuxième maillon de chaîne relié de manière articulée au premier maillon de chaîne; la traverse (127) comportant de préférence un support (129) avec un bras de retenue (131) sur lequel est monté le deuxième composant de l'unité de détection (120) est fixé, le bras de retenue (131) s'étendant transversalement à la traverse (127) afin de positionner le deuxième composant par rapport au premier composant de telle sorte que les deux composants puissent coopérer pour détecter un jeu radial et/ou axial dû à l'usure dans la liaison articulée.

9. Chaîne porte-câbles (1), en particulier chaîne à rouleaux pour de longues courses, selon l'une quelconque des revendications 1 à 8, les pattes de chaîne (5) étant réalisées sous forme de pattes de chaîne coudées avec des tenons (6A) et des logements correspondants (6B),
**caractérisée en ce qu'**au moins certaines pattes de chaîne (5) comportent des galets de roulement (8) pour le roulement de la chaîne porte-câble (1); et/ou au moins certaines des pattes de chaîne (5) présentent un premier évidement coaxial au tenon (6A) pour le premier composant.

10. Chaîne porte-câbles (1) selon l'une quelconque des revendications 1 à 6, chaque maillon de chaîne comprenant deux pattes de chaîne (5A, 5B), les pattes de chaîne (5A, 5B) formant des brins de patte opposés qui définissent un espace de réception et les brins de patte étant maintenus parallèles au moins sur chaque deuxième maillon de chaîne par des traverses (7) reliant les pattes de chaîne (5A, 5B), **caractérisée en ce que,** dans le cas d'au moins deux pattes de chaîne (5) reliés de manière articulée, une partie intérieure (123) est fixée dans l'espace de réception entre les traverses (7), les parties intérieures (123) présentant deux zones d'extrémité (124, 125) opposées axialement à l'axe de pivotement nominal (A) de la liaison articulée des pattes de chaîne (5) et le premier composant étant fixé à la zone d'extrémité (124, 125) de l'une des parties intérieures (123) et le deuxième composant étant fixé à la zone d'extrémité (124, 125) de l'autre partie intérieure (123).

11. Chaîne porte-câbles (1) selon l'une quelconque des revendications 1 à 10 précédentes, **caractérisée en ce que**, dans une section longitudinale, un certain nombre de maillons de chaîne successifs comportent chacun un premier composant électrique et un deuxième composant électrique, en particulier une cascade en série d'un certain nombre d'unités de détection (10; 20; 30; 40; 50; 120) étant prévue; les composants étant de préférence réalisés sous forme de bobines (11, 12) et les bobines d'une patte de chaîne (5) présentant un nombre de spires différent, en particulier avec un rapport de spires qui compense au moins en partie les pertes de tension dans la cascade.

12. Système de détection avec une chaîne porte-câbles selon l'une quelconque des revendications précédentes, **caractérisé en ce qu'**une unité d'évaluation (90) pour l'évaluation des signaux est reliée à au moins l'une unité de détection (10; 20; 30; 40; 50; 120), en particulier à chaque unité de détection (10; 20; 30; 40; 50; 120); l'unité d'évaluation (90) de préférence alimentant côté entrée l'unité ou les unités de détection (10; 20; 30; 40; 50) avec une tension de référence, en particulier une tension alternative, afin de prélever un signal de sortie côté sortie et/ou comporte une mémoire avec une plage de valeurs de consigne mémorisée pour le fonctionnement nominal et compare un signal électrique prélevé par l'unité de détection, en particulier par plusieurs unités de détection en cascade, de préférence après filtrage, avec la plage de valeurs de consigne.

13. Patte de chaîne (5, 5A, 5B) pour une chaîne porte-câbles (1) avec détection d'usure, comprenant un tenon (6A) et un logement correspondant (6B) pour former des articulations avec chacun un axe de pivotement nominal (A) entre des maillons de chaîne successifs,
**caractérisée en ce**
**qu'**un premier composant électrique est fixé dans la zone du tenon (6A) avec une orientation prédéfinie par rapport à l'axe de pivotement nominal (A), en particulier coaxialement au tenon (6A), et un deuxième composant électrique est fixé dans la zone du logement (6B) avec une orientation prédéfinie par rapport à l'axe de pivotement nominal (A), en particulier coaxialement au logement (6B).
